# EUROPEAN PATENT APPLICATION

(11) **EP 4 618 471 A1**
(43) Date of publication of application: **17.09.2025**
(21) Application number: 25160354.4
(22) Date of filing: 26.02.2025
(51) Int. Cl.: H04L 9/08, H04L 9/14

(54) **INFORMATION PROCESSING DEVICE, QUANTUM CRYPTOGRAPHIC COMMUNICATION SYSTEM, INFORMATION PROCESSING METHOD, AND COMPUTER-READABLE MEDIUM**

(30) Priority: 11.03.2024 JP 2024037152
(71) Applicant: Kabushiki Kaisha Toshiba, Tokyo 105-0023 (JP)
(72) Inventor: Tanizawa, Yoshimichi, Tokyo (JP); Takahashi, Ririka, Tokyo (JP); Doi, Kazuaki, Tokyo (JP)
(74) Representative: Marks & Clerk LLP

(57) **Abstract**

According to one arrangement, an information processing device (2) relays a second encryption key encrypted with a first encryption key shared between opposing quantum key distribution (QKD) devices (1) included in a QKD network (100). The information processing device (2) includes a first processing module (27) configured to control, after determining a transfer destination of a received packet, execution of decryption of the encrypted second encryption key included in the packet.

## Description

### FIELD

The present disclosure relates to an information processing device, a quantum cryptographic communication system, an information processing method, and a computer-readable medium.

### BACKGROUND

A quantum key distribution (QKD) technology is a technique for securely sharing a key for encrypted data communication between a QKD transmitter that continuously transmits a single photon and a QKD receiver that receives the single photon, the QKD transmitter and the QKD receiver being connected by an optical fiber. It is ensured that a key shared by the quantum key distribution (QKD) technology is not eavesdropped based on the principle of quantum mechanics. The key sharing by the QKD has a limited communicable distance in principle, and thus only one-to-one key sharing is available. A key management (KM) device is introduced in addition to a QKD device, and the KM device has a configuration of holding and managing the key and relaying the key to be able to configure a QKD network (QKDN). As a result, it is possible to realize encryption key sharing between any two sites in a network having the QKD as a link and the KM as a node.

However, in the related art technique, it is difficult to further improve the security of the encryption key held and managed in the device.

### BRIEF DESCRIPTION OF THE DRAWINGS

Fig. 1 is a diagram illustrating a concept of a QKD network;
Fig. 2 is a diagram illustrating an example of a device configuration of communication in sites A, B, and C of Fig. 1;
Fig. 3 is a diagram illustrating an operation example of a case where the KM 2B in Fig. 2 is a relay point of a key relay;
Fig. 4 is a diagram illustrating an operation example in a case where the KM 2B in Fig. 2 is an end point of a key relay;
Fig. 5 is a diagram illustrating an operation example in a case where the KM 2B in Fig. 2 is a start point of a key relay;
Fig. 6 is a diagram collectively illustrating three cases of Figs. 3 to 5;
Fig. 7 is a diagram for describing a section in which a plaintext application key exists in the KM 2B of Fig. 3;
Fig. 8 is a diagram for describing a section in which a plaintext application key exists in the KM 2B of Fig. 4;
Fig. 9 is a diagram for describing a section in which a plaintext application key exists in the KM 2B of Fig. 5;
Fig. 10 is a view collectively illustrating three cases in Figs. 7 to 9;
Fig. 11 is a diagram illustrating an example of a functional configuration of a KM according to a first arrangement;
Fig. 12 is a diagram for describing the functional block of nftables (iptables) corresponding to the first processing module of the first arrangement;
Fig. 13 is a diagram illustrating an operation example (in a case where an application key is transferred) of a KM according to the first arrangement;
Fig. 14 is a diagram illustrating an operation example (in a case where an application key is received) of the KM according to the first arrangement;
Fig. 15 is a diagram illustrating an operation example (in a case where an application key is transmitted) of the KM according to the first arrangement;
Fig. 16 is a view collectively illustrating three cases in Figs. 13 to 15;
Fig. 17 is a flowchart illustrating an operation example (in a case where an application key is transferred) of the KM according to the first arrangement;
Fig. 18 is a flowchart illustrating an operation example (in a case where an application key is received) of the KM of the first arrangement;
Fig. 19 is a flowchart illustrating an operation example (in a case where an application key is transmitted) of the KM of the first arrangement;
Fig. 20 is a flowchart illustrating an operation example (in a case where an application key is transferred) of the KM according to a second arrangement;
Fig. 21 is a flowchart illustrating an operation example (in a case where an application key is transferred) of the KM according to a third arrangement;
Fig. 22 is a diagram illustrating an example of a hardware configuration of the QKD device according to the first to third arrangements; and
Fig. 23 is a diagram illustrating an example of a hardware configuration of the key management device according to the first to third arrangements.

### DETAILED DESCRIPTION

In general, according to one arrangement, an information processing device relays a second encryption key encrypted with a first encryption key shared between opposing quantum key distribution (QKD) devices included in a QKD network. The information processing device includes a first processing module configured to control, after determining a transfer destination of a received packet, execution of decryption of the encrypted second encryption key included in the packet.

Exemplary arrangements of an information processing device, a quantum cryptographic communication system, an information processing method, and a computer-readable medium will be explained below in detail with reference to the accompanying drawings. The present invention is not limited to the following arrangements.

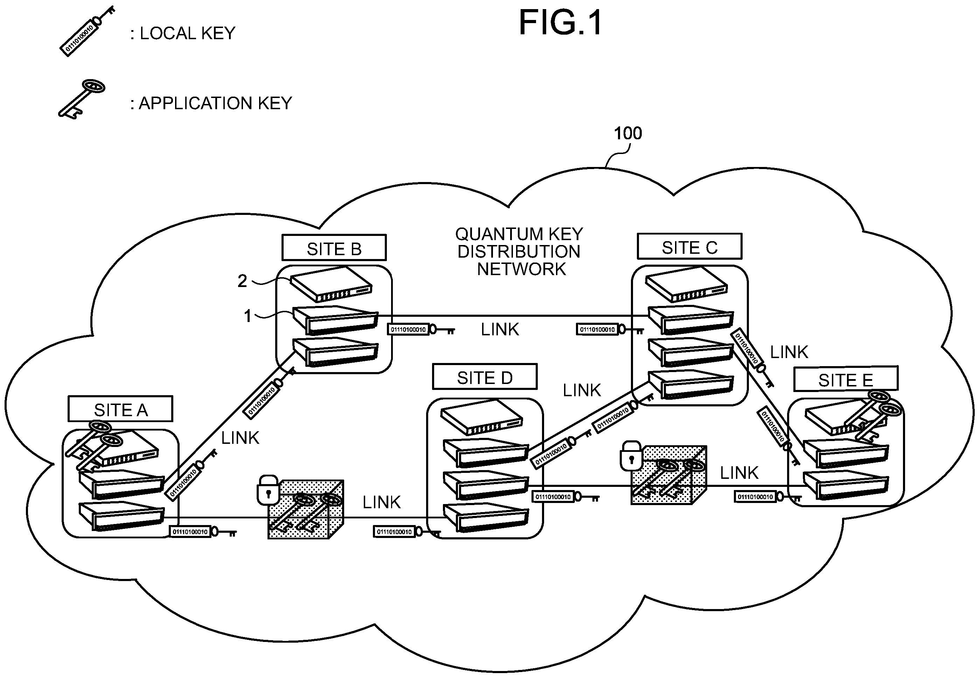

Fig. 1 is a diagram illustrating a concept of a QKD network 100. The QKD device 1 executes the QKD protocol with an opposing QKD device 1 by the QKD as described above to generate an encryption key (hereinafter, referred to as a "local key").

The local key (first encryption key) is an encryption key shared between the QKD devices 1 by the QKD. The local key is provided to a key management device 2 (hereinafter, referred to as a "KM 2") connected in the site. The local key is used by the KM 2 to encrypt or decrypt the application key.

The KM 2 receives local keys from one or more QKD devices 1. The KM 2 holds and manages an encryption key (a local key and an application key) and relays the application key between the KMs 2, thereby realizing encryption key sharing between any KMs 2. Details of the key relay will be described later.

The application key (hereinafter, is referred to as an "application key") is a random number generated by the KM 2 by a random number generator or the like. The application key (second encryption key) is shared between any sites by being relayed (transferred) between the KMs 2 while being encrypted and decrypted by the local key in the KM 2. The application key is provided to an application (not illustrated) by the KM 2 and used for cryptographic communication. The application connects to the KM 2, acquires an application key from the KM 2, and performs cryptographic communication with another application. The application is usually installed in the same site as the KM 2 to be connected. A plurality of applications may be connected to one KM 2.

Each of the sites A to E is a place where the QKD device 1 and the KM 2 are installed. The site is assumed to be a section in which physical safety is ensured, thereby ensuring security in storage and relay of an encryption key.

Note that the QKD device 1 and the KM 2 may be implemented integrally and may be referred to as a trusted node.

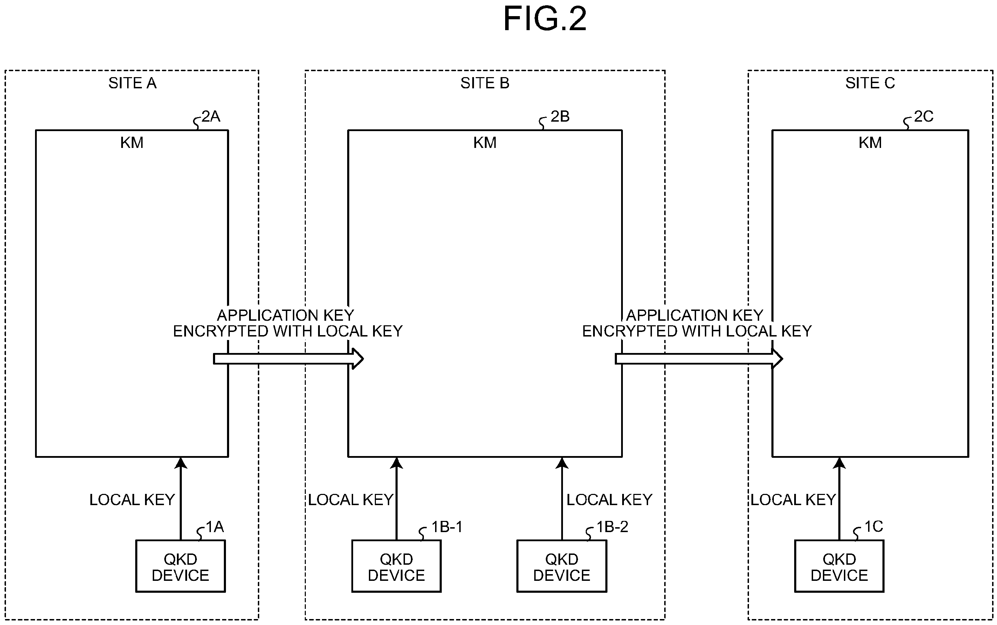

Fig. 2 is a diagram illustrating an example of a device configuration of communication in the sites A, B, and C of Fig. 1. In the example of Fig. 2, KMs 2A, 2B, and 2C are installed in the sites A, B, and C, respectively. In addition, a QKD device 1A is installed in the site A, QKD devices 1B-1 and 1B-2 are installed in the site B, and a QKD device 1C is installed in the site C.

The QKD is executed between the QKD device 1A and the QKD device 1B-1, and between the QKD device 1B-2 and the QKD device 1C, a local key is generated, and the local key is provided to each of the KMs 2A to 2C in the sites A to C.

The KM 2A transfers the application key encrypted with the local key shared between the QKD device 1A and the QKD device 1B-1 to the KM 2B. Similarly, the KM 2B transfers the application key encrypted with the local key shared by the QKD device 1B-2 and the QKD device 1C to the KM 2C.

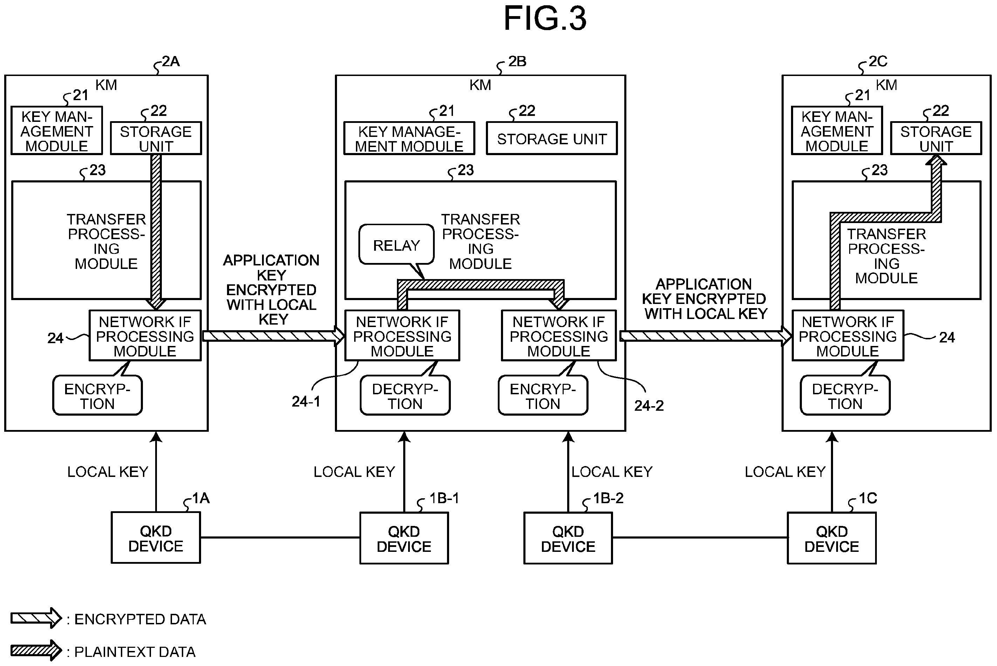

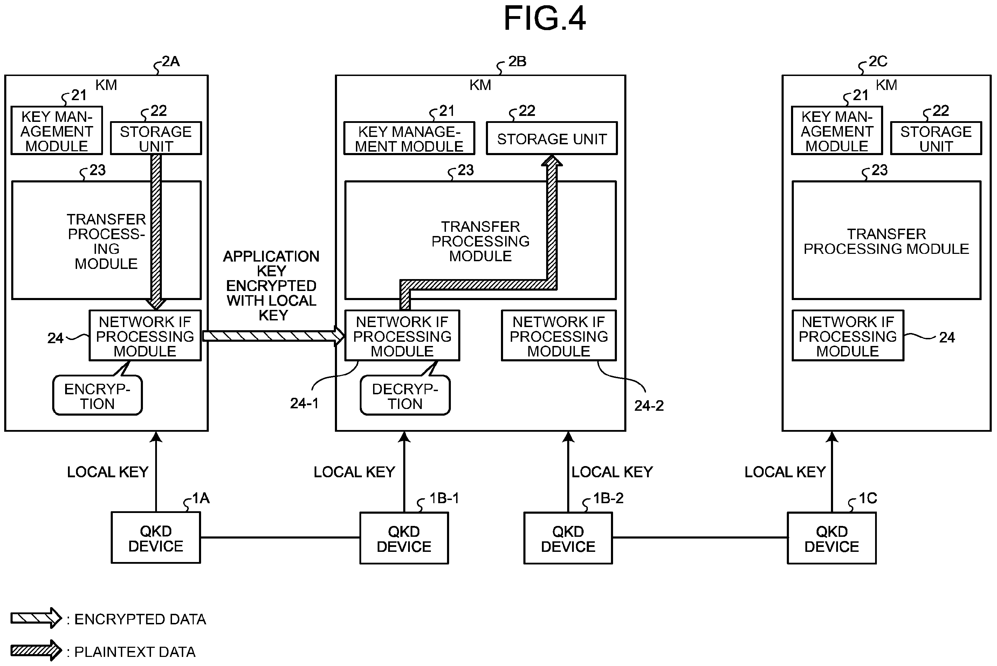

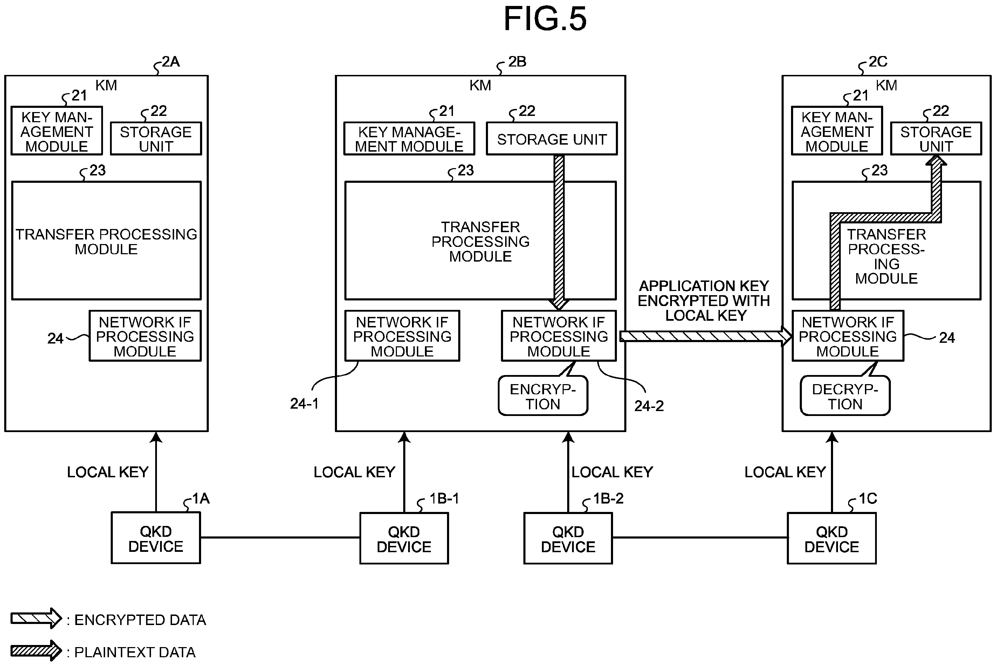

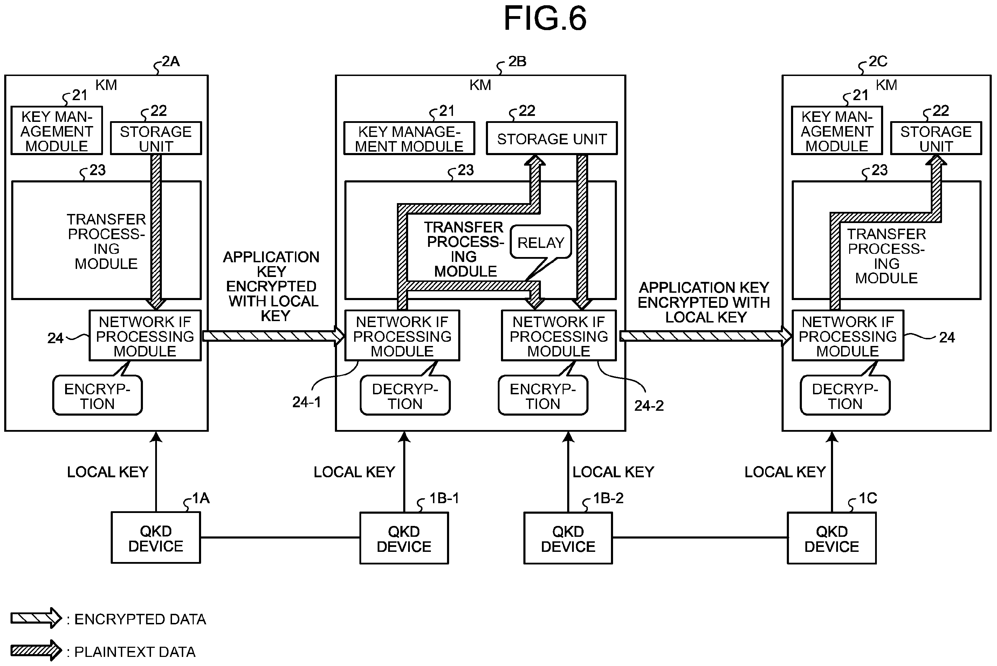

Hereinafter, the basic operation of the key relay will be described with reference to Figs. 3 to 6 taking the device configuration of Fig. 2 as an example. In Figs. 3 to 6, focusing on the KM 2B, a case in which it is a relay point of the key relay (Fig. 3), a case in which it is an end point of the key relay (Fig. 4), a case in which it is a start point of the key relay (Fig. 5), and a summary of the three cases (Fig. 6) are illustrated.

Fig. 3 is a diagram illustrating an operation example of a case where the KM 2B in Fig. 2 is a relay point of a key relay. The KM 2A includes a key management module 21, a storage unit 22, a transfer processing module 23, and a network interface (IF) processing module 24.

The key management module 21 generates an application key. The key management module 21 generates an application key using, for example, a random number generator such as Quantum Random Number Generation (QRNG). The key management module 21 also performs a process of providing an application key to an application via a wired or wireless communication IF.

The storage unit 22 mainly manages and holds an application key. Note that the storage unit 22 may manage and hold the local key. The storage unit 22 is realized by, for example, a combination of a main storage device such as a read only memory (ROM) and a random access memory (RAM) and an auxiliary storage device such as a hard disk drive (HDD) and a memory card.

The key management module 21, the transfer processing module 23, and the network IF processing module 24 are realized by at least one processing unit. The processing unit includes, for example, a control device and an arithmetic device, and is realized by an analog or digital circuit or the like. The processing unit may be a central processing unit (CPU), or may be a general-purpose processor, a microprocessor, a digital signal processor (DSP), an application specific integrated circuit (ASIC), a field-programmable gate array (FPGA), and a combination thereof.

The transfer processing module 23 processes the packet (communication packet) according to the routing table information. For example, the transfer processing module 23 controls processing (transmission, reception, and transfer) of a packet including data indicating an application key.

The network IF processing module 24 transmits and receives packets. The network IF processing module 24 also encrypts and decrypts the application key with the local key. Note that the local key used for encryption/decryption in the KM 2A is provided from the QKD device 1A.

Note that the network IF processing module 24 may manage and hold the local key. The number of network IF processing modules 24 is equal to the number of network IFs to which the application key can be transferred. Therefore, as in the example of the KM 2B in Fig. 3, one KM 2 may include a plurality of network IF processing modules 24.

Fig. 3 illustrates a case where an application key is generated by the KM 2A, the KM 2B relays the application key, the KM 2C receives the application key, and as a result, the application key is shared between the KM 2A and the KM 2C.

The key management module 21 of the KM 2A generates an application key, and the storage unit 22 manages and holds the application key. The generated application key is passed to the transfer processing module 23 and processed. Specifically, a header or the like of the packet is set based on the information about the transmission destination of the application key, and the network IF of the transmission destination is determined. The packet including the data indicating the application key is passed to the network IF processing module 24 corresponding to the transmission destination determined by the transfer processing module 23. The network IF processing module 24 encrypts a packet including data indicating the application key using the local key corresponding to the network IF of the transmission destination, and transfers the encrypted application key from the KM 2A to the KM 2B.

Upon receiving the encrypted application key, the network IF processing module 24-1 of the KM 2B decrypts the encrypted application key using the local key corresponding to the network IF.

Next, the transfer processing module 23 processes the packet including the decrypted application key. Specifically, the transfer processing module 23 determines the transfer destination (transmission destination) of the packet by referring to destination information or the like indicated in the header of the packet. The packet including the application key data is passed to the network IF processing module 24-2 corresponding to the transmission destination determined by the transfer processing module 23. The network IF processing module 24-2 encrypts a packet including data indicating the application key using the local key corresponding to the network IF of the transmission destination, and transfers the encrypted application key from the KM 2B to the KM 2C.

Upon receiving the encrypted application key, the network IF processing module 24 of the KM 2C decrypts the encrypted application key using the local key corresponding to the network IF.

Next, the transfer processing module 23 processes the packet including the decrypted application key. Specifically, the transfer processing module 23 refers to destination information or the like indicated in the header of the packet, identifies that the KM 2C is a destination, and performs a packet reception process. As a result, the storage unit 22 holds (manages) the received application key.

In the above process, the application key is shared between the KM 2A and the KM 2C.

Next, Fig. 4 will be described.

Fig. 4 is a diagram illustrating an operation example in a case where the KM 2B in Fig. 2 is an end point of the key relay. Fig. 4 illustrates a case where the application key is generated in the KM 2A, and the KM 2B receives the application key, and as a result, the application key is shared between the KM 2A and the KM 2B.

The key management module 21 of the KM 2A generates an application key, and the storage unit 22 also manages and holds the application key. The generated application key is passed to the transfer processing module 23 and processed. Specifically, a header or the like of the packet is set based on the information about the transmission destination of the application key, and the network IF of the transmission destination is determined. The packet including the data indicating the application key is passed to the network IF processing module 24 corresponding to the transmission destination determined by the transfer processing module 23. The network IF processing module 24 encrypts a packet including data indicating the application key using the local key corresponding to the network IF of the transmission destination, and transfers the encrypted application key from the KM 2A to the KM 2B.

Upon receiving the encrypted application key, the network IF processing module 24-1 of the KM 2B decrypts the encrypted application key using the local key corresponding to the network IF.

Next, the transfer processing module 23 processes the packet including the decrypted application key. Specifically, the transfer processing module 23 refers to destination information or the like indicated in the header of the packet, identifies that KM 2B is a destination, and performs a packet reception process. As a result, the storage unit 22 holds (manages) the received application key.

In the above process, the application key is shared between the KM 2A and the KM 2B.

Next, Fig. 5 will be described.

Fig. 5 is a diagram illustrating an operation example in a case where the KM 2B in Fig. 2 is a start point of the key relay. Fig. 5 illustrates a case where the application key is generated by the KM 2B, and the KM 2C receives the application key, and as a result, the application key is shared between the KM 2B and the KM 2C.

The key management module 21 of the KM 2B generates an application key, and the storage unit 22 also manages and holds the application key. The generated application key is passed to the transfer processing module and processed. Specifically, a header or the like of the packet is set based on the information about the transmission destination of the application key, and the network IF of the transmission destination is determined. The packet including the data indicating the application key is passed to the network IF processing module 24 corresponding to the transmission destination determined by the transfer processing module 23. The network IF processing module 24 encrypts a packet including data indicating the application key using the local key corresponding to the network IF of the transmission destination, and transfers the encrypted application key from the KM 2B to the KM 2C.

Upon receiving the encrypted application key, the network IF processing module 24 of the KM 2C decrypts the encrypted application key using the local key corresponding to the network IF.

Next, the transfer processing module 23 processes the packet including the decrypted application key. Specifically, the transfer processing module 23 refers to destination information or the like indicated in the header of the packet, identifies that the KM 2C is a destination, and performs a packet reception process. As a result, the storage unit 22 holds (manages) the received application key.

In the above processing, the application key is shared between the KM 2B and the KM 2C.

Next, Fig. 6 will be described.

Fig. 6 is a diagram collectively illustrating three cases of Figs. 3 to 5. That is, focusing on the KM 2B, three cases including a case of transferring (relaying) the application key, a case of being a destination of the application key (a case of being an end point of the application key data), and a case of being a transmission source of the application key (a case of being a start point of the application key data) are illustrated together.

Here, the storage unit 22 of the KM 2B holds (manages) the application key generated as a transmission source by the KM 2B and the application key received as a destination by the KM 2B.

As described above, the network IF processing module 24-1 decrypts the received application key using the local key and passes the decrypted application key to the transfer processing module 23. In addition, the network IF processing module 24-2 receives the transmitted application key from the transfer processing module 23, and encrypts the application key using the local key to transmit the encrypted application key.

The transfer processing module 23 of the KM 2B receives, relays, and transmits a packet including data indicating an application key.

At the time of reception, the transfer processing module 23 acquires an application key from the packet received from the network IF processing module 24-1, and stores the application key in the storage unit 22.

At the time of transmission, the transfer processing module 23 passes the application key read from the storage unit 22 to the network IF processing module 24-2.

At the time of relay, the transfer processing module 23 passes the packet received from the network IF processing module 24-1 to the network IF processing module 24-2.

Note that the transfer processing module 23 determines the transfer processing (transfer processing) of the packets by referring to the routing table.

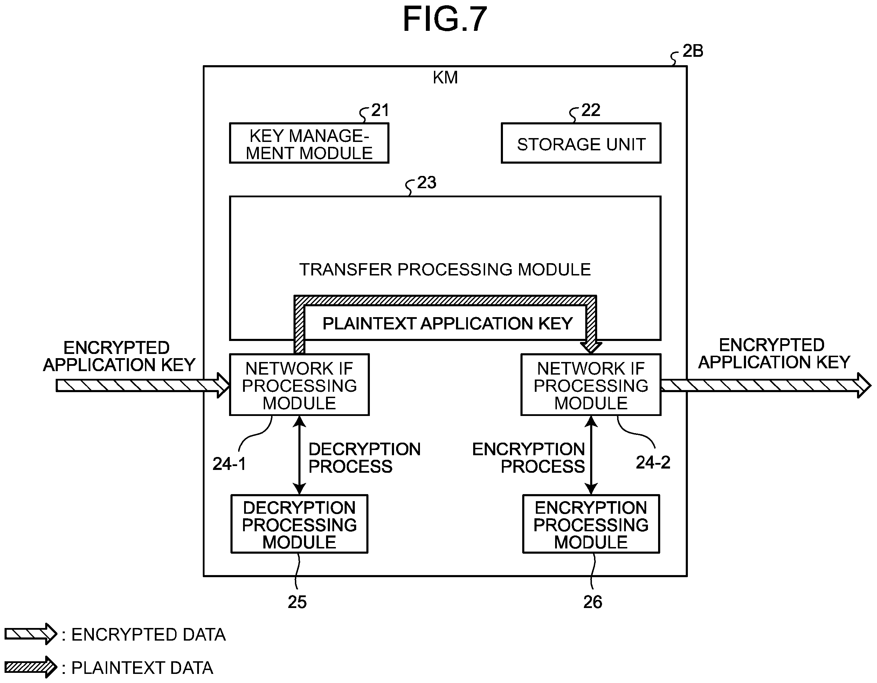

Figs. 7 to 10 are diagrams illustrating Figs. 3 to 6 again focusing on the KM 2B and illustrating a section in which a plaintext application key exists.

Fig. 7 is a diagram for describing a section in which a plaintext application key exists in the KM 2B of Fig. 3. In the case of Fig. 7, when receiving an encrypted application key from the outside, the network IF processing module 24-1 decrypts the application key using the local key using a decryption processing module 25.

The network IF processing module 24-1 passes the plaintext application key to the transfer processing module 23. Next, the transfer processing module 23 refers to information about the header or the like of the packet including the application key to identify the transfer destination, and passes the plaintext application key to the network IF processing module 24-2.

The network IF processing module 24-2 encrypts the application key using the local key using an encryption processing module 26 to transmit the encrypted application key to the outside.

At this time, the application key received from the outside and the application key transmitted to the outside are encrypted with the local key. On the other hand, the application key passed from the network IF processing module 24-1 to the transfer processing module 23, the application key being processed by the transfer processing module 23, and the application key passed from the transfer processing module 23 to the network IF processing module 24-2 are not encrypted and are plaintext.

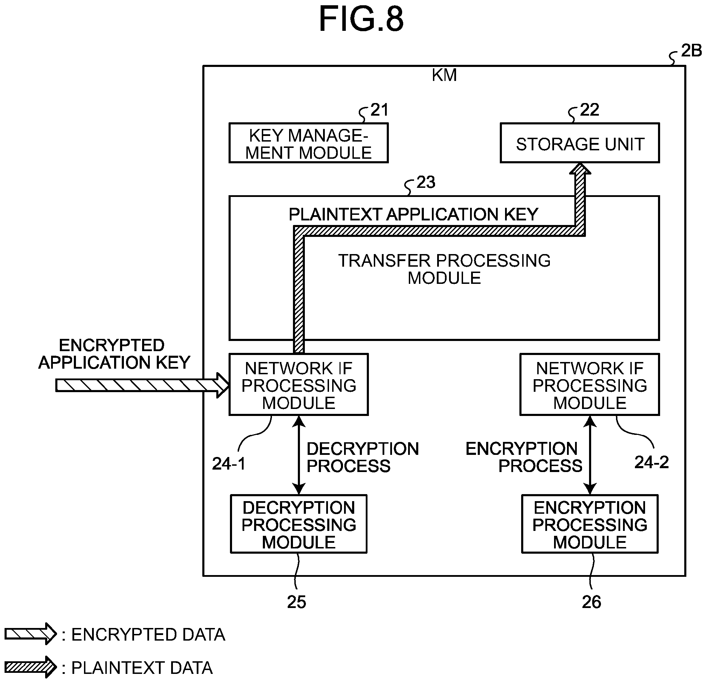

Fig. 8 is a diagram for describing a section in which a plaintext application key exists in the KM 2B of Fig. 4. In the case of Fig. 8, when receiving an encrypted application key from the outside, the network IF processing module 24-1 decrypts the application key using the local key using the decryption processing module 25.

The network IF processing module 24-1 passes the plaintext application key to the transfer processing module 23. Next, the transfer processing module 23 refers to the information such as the header of the packet including the application key, identifies that the transfer destination of the application key is the KM 2B, executes the packet reception process, and stores the application key in the storage unit 22.

At this time, the application key received from the outside is encrypted with the local key. On the other hand, the application key passed from the network IF processing module 24-1 to the transfer processing module 23, the application key being processed by the transfer processing module 23, and the application key passed from the transfer processing module 23 to the storage unit 22 are not encrypted and are plaintext.

Note that the application key can be encrypted and stored in the storage unit 22.

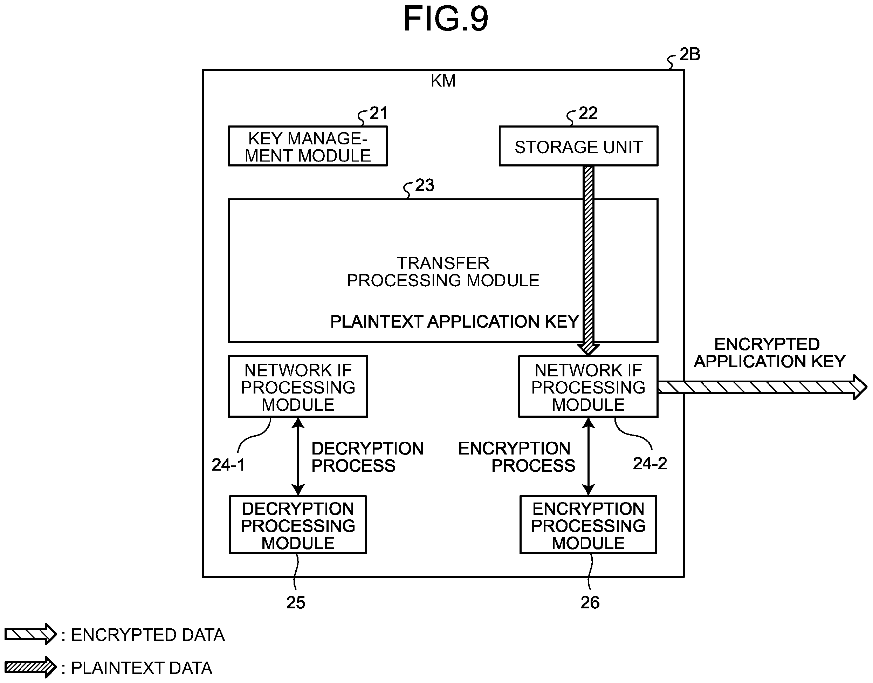

Fig. 9 is a diagram for describing a section in which a plaintext application key exists in the KM 2B of Fig. 5. In the case of Fig. 9, the transfer processing module 23 reads the application key from the storage unit 22.

Next, the transfer processing module 23 constructs a packet header or the like from destination information or the like of the application key. In addition, the transfer processing module 23 refers to information such as a packet header, identifies a transfer destination of the application key, and passes the plaintext application key to the network IF processing module 24-2.

The network IF processing module 24-2 encrypts the application key using the local key using the encryption processing module 26 to transmit the encrypted application key to the outside.

At this time, the application key transmitted to the outside is encrypted with the local key. On the other hand, the application key passed from the storage unit 22 to the transfer processing module 23, the application key being processed by the transfer processing module 23, and the application key passed from the transfer processing module 23 to the network IF processing module 24-2 are not encrypted and are plaintext.

Note that the application key can be encrypted and stored in the storage unit 22.

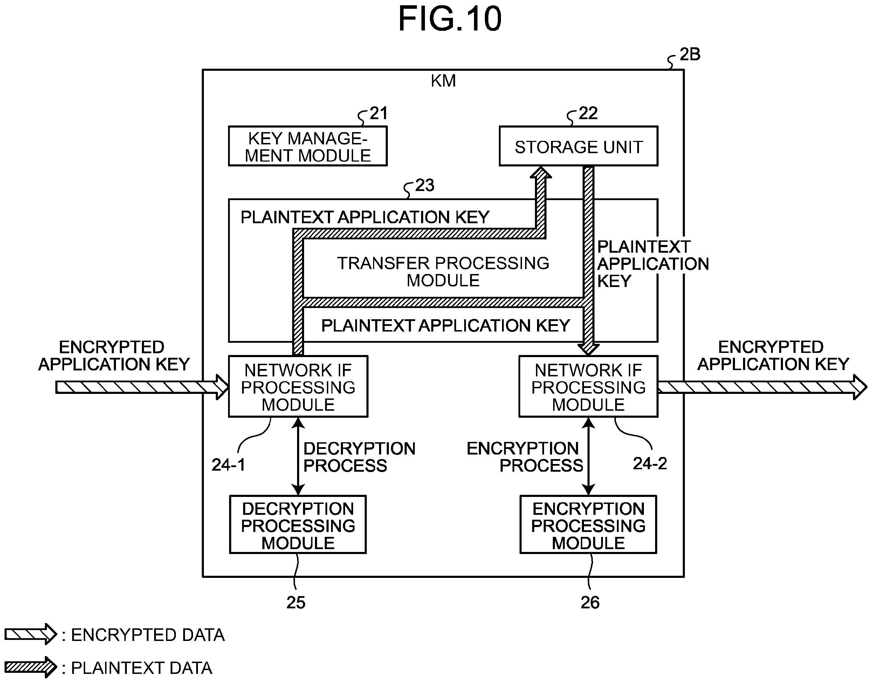

Fig. 10 is a diagram collectively illustrating three cases of Figs. 7 to 9. To collect the three cases described with reference to Figs. 7 to 9, a plaintext application key exists in the section illustrated in Fig. 10.

As described above, the KM 2 transfers the application key data in the form of being encrypted with the local key, thereby securely sharing the application key between any two sites (between the KMs 2). However, the application key delivered between the network IF processing module 24 and the transfer processing module 23, the application key being processed by the transfer processing module 23, and the application key delivered between the transfer processing module 23 and the storage unit are plaintext.

Therefore, in order to safely relay the application key, it is essential to securely operate each site (all sites of the site serving as the start point of the application key transfer, the site to be relayed, and the site serving as the end point). In a case where an attacker enters the site and further enters the KM 2, or in a case where there is an attacker inside the site, the application key passed between the network IF processing module 24 and the transfer processing module 23, the application key being processed by the transfer processing module 23, and the application key passed between the transfer processing module 23 and the storage unit 22 are referred to by memory reference or the like, which can lead to information leakage.

Therefore, in the case of considering preparation for an attack or the like from the inside of the site in addition to the secure operation of the site, it is desirable that the application key is not processed in plaintext as much as possible and is processed in an encrypted state even inside the KM 2.

In the QKDN, a node that performs key relay performs processes of (1) decryption of an application key with a local key, (2) transfer process of the application key, and (3) encryption of the application key with the local key. During a period from decryption of the application key with the local key to encryption of the application key with the local key, the application key is held (temporarily) in the node as plaintext. Although this time is a short time for performing the transfer process by the node, it is necessary to use a physical security technique, a memory encryption technique, or the like in combination in order to secure the security of the key.

In the conventional key relay in the node on the QKDN, the decryption with the local key is performed in the network interface process when the application key is received, and the encryption process with the local key is performed in the network interface process when the application key is transmitted. Therefore, as described above, there is a slight state in which the application key exists in plaintext on the system during the transfer process of the application key.

### First arrangement

Therefore, in the following first arrangement, the two processes of (1) the decryption process of the application key with the local key necessary for the application key reception and (2) the encryption process of the application key with the local key necessary for the application key transfer (transmission) are performed (A) continuously, (B) prior to the encryption process, or (C) simultaneously, during the transfer process (as a specific example, forward processing in the iptables/nftables process on the linux OS), so that the time during which the application key is held in plaintext is made substantially zero when key relay is performed. As a result, it is possible to minimize the risk of leakage of an application key due to an intrusion attack on a node that performs key relay.

### Example of functional configuration

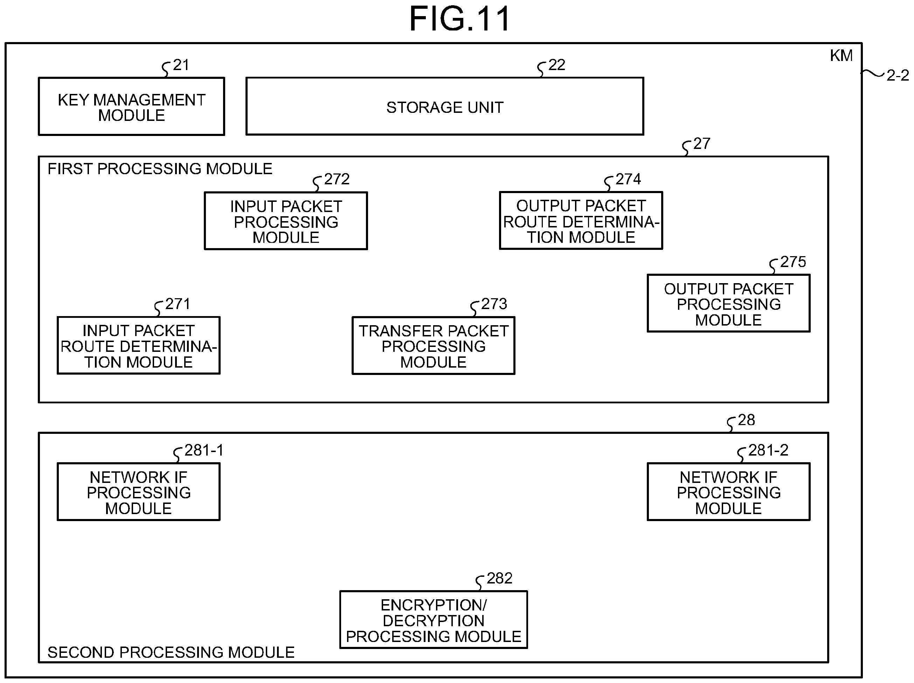

Fig. 11 is a diagram illustrating an example of a functional configuration of a KM 2-2 according to the first arrangement. The KM 2-2 of the first arrangement includes a key management module 21, a storage unit 22, a first processing module 27, and a second processing module 28. The description of the key management module 21 and the storage unit 22 is similar to the description of Fig. 3 described above, and thus will be omitted.

The first processing module 27 and the second processing module 28 are realized by at least one processing device. The first processing module 27 and the second processing module 28 are realized by, for example, two processing devices. The processing device includes, for example, a control device and an arithmetic device, and is realized by an analog or digital circuit or the like. The processing unit may be a central processing unit (CPU), or may be a general-purpose processor, a microprocessor, a digital signal processor (DSP), an ASIC, an FPGA, or a combination thereof.

The first processing module 27 includes an input packet route determination module 271, an input packet processing module 272, a transfer packet processing module 273, an output packet route determination module 274, and an output packet processing module 275.

The second processing module 28 performs a transmission process of transmitting a packet including an encrypted application key (second encryption key) to another KM 2-2 via the network IF. The second processing module 28 includes network IF processing modules 281-1 and 281-2 and an encryption/decryption processing module 282.

Hereinafter, in a case where the network IF processing modules 281-1 and 281-2 are not distinguished from each other, they are simply referred to as a network IF processing module 281. In the example of Fig. 11, two network IF processing modules 281-1 and 281-2 are illustrated, but the number of network IF processing modules 281 may be any. That is, the network IF processing module 281 may exist corresponding to any number of network IFs included in the KM 2-2.

The functional configuration of the first processing module 27 described above corresponds to, for example, the function of the transfer processing module (Ip Layer and Bridge Layer) implemented as iptables or nftables in the Linux (registered trademark) operating system.

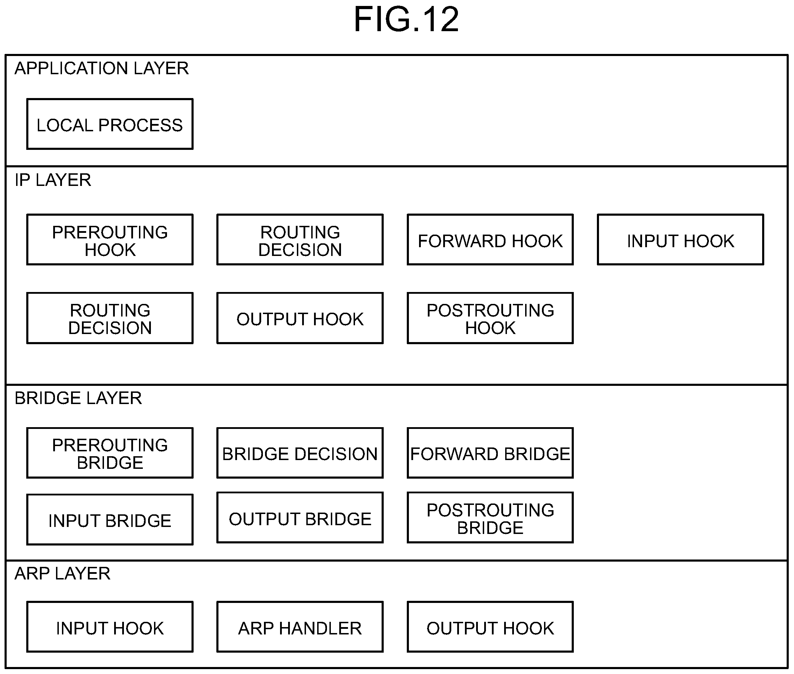

Fig. 12 is a diagram for describing the functional block of nftables (iptables) corresponding to the first processing module 27 of the first arrangement. Referring to Fig. 12, a correspondence relationship between internal components of the first processing module 27 and the hook function (implementation) of nftables/iptables will be described below.

### Case of corresponding to transfer in IP Layer (IP Routing)

The input packet route determination module 271 corresponds to a prerouting hook and a routing decision. The input packet processing module 272 corresponds to an input hook. The transfer packet processing module 273 corresponds to a forward hook. The output packet route determination module 274 corresponds to a routing decision and an output hook. The output packet processing module 275 corresponds to a postrouting hook.

### Case of corresponding to transfer (Bridging) in Layer 2

The input packet route determination module 271 corresponds to a prerouting bridge and a routing decision. The input packet processing module 272 corresponds to an input bridge. The transfer packet processing module 273 corresponds to a forward bridge. The output packet route determination module 274 corresponds to an output bridge. The output packet processing module 275 corresponds to a postrouting bridge.

Note that the above correspondence indicates correspondence of functional positioning for reference, and does not mean that each processing of the components inside the first processing module 27 is the same as the processing of the functional block in Fig. 11.

### Functional configuration of first processing module

Returning to Fig. 11, the input packet route determination module 271 receives a packet including data indicating the encrypted application key from the network IF processing module 281-1, and determines the destination of the packet. When the destination is the KM 2-2, the packet is transferred to the input packet processing module 272. When the destination is not the KM 2-2, the packet is transferred to the transfer packet processing module 273.

The determination is made by referring to the destination address described in the packet header and the routing table held by the KM 2-2. When the destination address matches the address of the KM 2-2, it is determined that the packet is addressed to the KM 2-2, and the packet is transferred to the input packet processing module 272. When the destination address does not match KM 2-2, the packet is transferred to the transfer packet processing module 273.

When the received packet is addressed to the KM 2-2, the input packet processing module 272 processes the encrypted application key included in the packet. When receiving a packet including an encrypted application key from the input packet route determination module 271, the input packet processing module 272 decrypts the application key using the encryption/decryption processing module 282 and then stores the application key in the storage unit 22.

That is, in a case where the transfer destination is the own device, the input packet processing module 272 controls execution of decryption of the encrypted application key (second encryption key) included in the packet, and then performs input processing of storing the decrypted application key in the storage unit 22. The input packet processing module 272 performs this input processing using the input hook function in iptables or nftables.

The transfer packet processing module 273 decrypts and encrypts the encrypted application key using the encryption/decryption processing module 282. In a case where the transfer destination is another KM 2-2, the transfer packet processing module 273 performs a decryption process and an encryption process using the packet transfer hook function in iptables or nftables. The processing of the transfer packet processing module 273 is the most characteristic part of the first arrangement, and details of the processing will be described later.

The output packet route determination module 274 reads the application key from the storage unit 22 and determines where the destination of the packet including the data indicating the application key is. The determination is made by referring to the destination address described in the packet header and the routing table held by the KM 2-2. The network IF processing module 281 serving as the output destination differs depending on the determination result. The packet whose destination is determined is transferred to the output packet processing module 275.

That is, in a case of transmitting the application key (second encryption key) generated by the random number generator of the key management module 21 to another KM 2-2, the output packet route determination module 274 performs an output process of controlling execution of encryption of the application key generated by the random number generator after determining the transmission destination of the packet including the application key generated by the random number generator and before the transmission process by the second processing module 28. The output packet route determination module 274 performs this output processing using the output hook function in iptables or nftables.

The output packet processing module 275 processes a packet to be transmitted to the outside. The output packet processing module 275 encrypts the application key using the local key corresponding to the network IF determined by the output packet route determination module 274 using the encryption/decryption processing module 282. Then, the output packet processing module 275 transfers a packet including data indicating the encrypted application key to, for example, the network IF processing module 281-2.

### Functional configuration of second processing module

The network IF processing module 281 passes a packet including data indicating the encrypted application key between the outside and the first processing module 27.

The encryption/decryption processing module 282 is used from the input packet processing module 272, the transfer packet processing module 273, and encrypts and decrypts data the output packet processing module 275 and indicating an application key. When used from the input packet processing module 272, the encryption/decryption processing module 282 decrypts data indicating an application key. When used from the transfer packet processing module 273, the encryption/decryption processing module 282 decrypts and encrypts data indicating an application key. When used from the output packet processing module 275, the encryption/decryption processing module 282 encrypts data indicating an application key.

Note that the key used for encryption and decryption is a local key. The local key is collectively managed as a key bundle for each QKD device 1 to which the KM 2-2 is connected. Note that a physical storage location of the local key is not limited.

When used from the input packet processing module 272, the encryption/decryption processing module 282 determines which key bundle is used to decrypt the data indicating the application key based on the transmission source address of the packet or the information about the network IF that has received the packet.

Note that the key bundle may be determined by the input packet processing module 272 or may be determined by the encryption/decryption processing module 282.

When used from the output packet processing module 275, the encryption/decryption processing module 282 determines which key bundle is used to encrypt the data indicating the application key based on the destination address of the packet or the information about the network IF that transmits out the packet.

Note that the key bundle may be determined by the output packet processing module 275 or may be determined by the encryption/decryption processing module 282.

When used from the transfer packet processing module 273, the encryption/decryption processing module 282 determines which key bundle is used to decrypt the data indicating the application key based on the transmission source address of the packet or the information about the network IF that has received the packet. In addition, the encryption/decryption processing module 282 determines which key bundle is used to encrypt the data indicating the application key based on the destination address of the packet or the information about the network IF that transmits the packet.

Note that the key bundle may be determined by the transfer packet processing module 273 or may be determined by the encryption/decryption processing module 282.

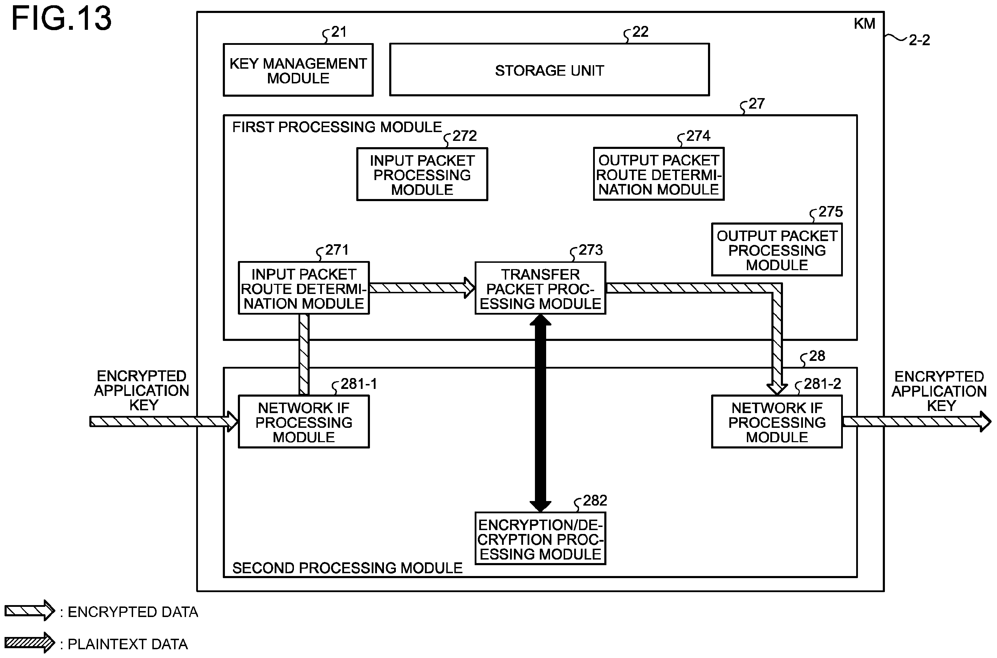

Next, an operation example of the KM 2-2 of the first arrangement will be described with reference to Figs. 13 to 16.

Fig. 13 is a diagram illustrating an operation example (in a case where an application key is transferred) of the KM 2-2 according to the first arrangement. Fig. 13 illustrates a case where the KM 2-2 according to the first arrangement transfers an application key received from the outside to the outside (relays the application key).

First, the network IF processing module 281-1 receives a packet including data indicating the encrypted application key. The network IF processing module 281-1 transfers the packet to the first processing module 27 as it is without decrypting the packet. In the first processing module 27, the input packet route determination module 271 receives this packet.

The input packet route determination module 271 identifies that the destination of the application key is a destination different from the address of the KM 2-2 and transfers the packet to the transfer packet processing module 273.

The transfer packet processing module 273 decrypts the encrypted application key and encrypts the decrypted application key using the encryption/decryption processing module 282.

The encryption/decryption processing module 282 decrypts and encrypts data indicating the application key using the local key. The key bundle of the local key used for decryption is identified based on the transmission source address of the packet or information about the network IF that has received the packet. The key bundle of the local key used for encryption is identified based on the destination address of the packet or information about the network IF that transmits the packet.

The packet including the data indicating the encrypted application key is passed from the transfer packet processing module 273 to the network IF processing module 281-2, and is transferred from the network IF processing module 281-2 to the outside.

By the above process, the relay of the encrypted application key is realized. In the example of Fig. 13 described above, when the application key is relayed (transferred), not the network IF processing module 281 but the first processing module 27 decrypts and encrypts data indicating the application key. As a result, when the application key is relayed, the data indicating the application key is plaintext only inside the transfer packet processing module 273.

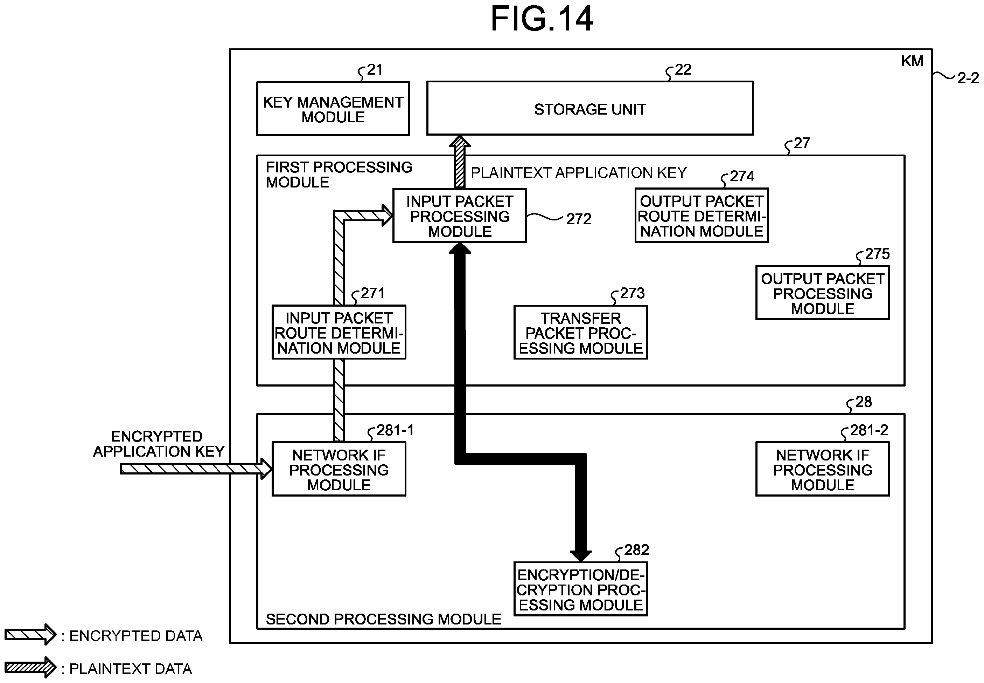

Fig. 14 is a diagram illustrating an operation example (in a case where an application key is received) of the KM 2-2 according to the first arrangement. Fig. 14 illustrates a case where an application key received from the outside by the KM 2-2 according to the first arrangement is received by the KM 2-2 (the end point of the key relay).

First, the network IF processing module 281-1 receives a packet including data indicating the encrypted application key. The network IF processing module 281-1 transfers the packet to the first processing module 27 as it is without decrypting the packet. In the first processing module 27, the input packet route determination module 271 receives this packet.

The input packet route determination module 271 identifies that the destination of the application key is the address of the KM 2-2 and transfers the packet to the input packet processing module 272. The input packet processing module 272 decrypts the application key using the encryption/decryption processing module 282.

The encryption/decryption processing module 282 decrypts data indicating the application key using the local key. The key bundle of the local key used for decryption is identified based on the transmission source address of the packet or the information about the network IF that has received the packet. The data indicating the decrypted application key is passed from the input packet processing module 272 to the storage unit 22 and stored in the storage unit 22.

The relay of the encrypted application key is terminated by the above process. In the example of Fig. 14 described above, when an application key is received, not the network IF processing module 281-1 on the reception side but the input packet processing module 272 decrypts data indicating the application key. As a result, when the application key is received, the data indicating the application key is plaintext only when the input packet processing module 272 stores the application key in the storage unit 22.

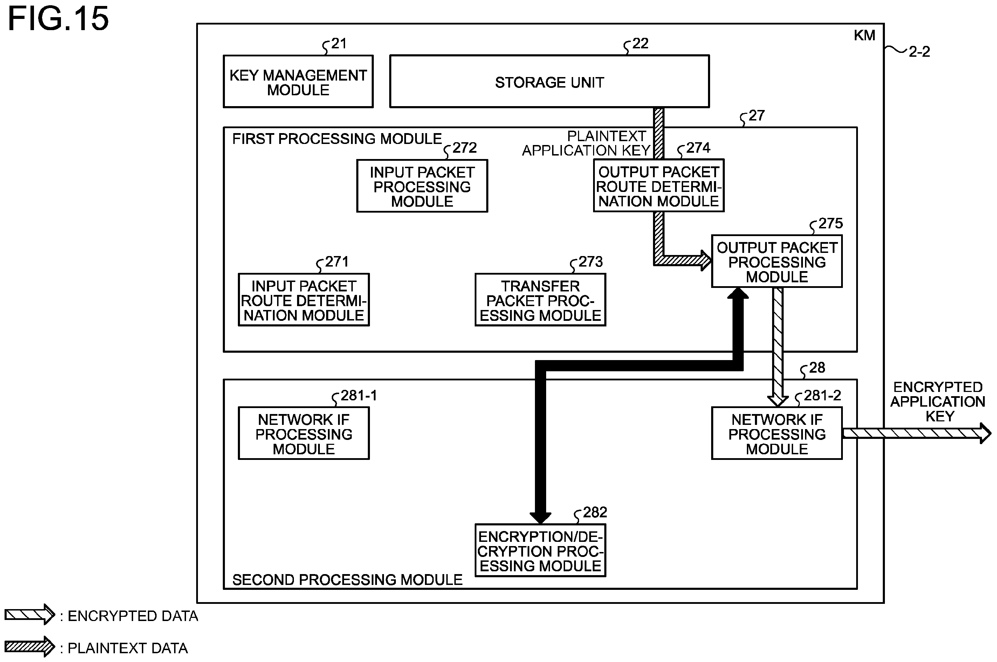

Fig. 15 is a diagram illustrating an operation example (in a case where an application key is transmitted) of the KM 2-2 according to the first arrangement. Fig. 15 illustrates a case where the KM 2-2 according to the first arrangement generates an application key to transmit the application key (serves as a start point of an application key relay).

The output packet route determination module 274 reads the application key generated by the key management module 21 from the storage unit 22. The output packet route determination module 274 identifies the destination of the application key and transfers a packet including data indicating the application key to the output packet processing module 275. The output packet processing module 275 encrypts the data indicating the application key using the encryption/decryption processing module 282.

The encryption/decryption processing module 282 encrypts data indicating the application key using the local key. The key bundle of the local key used for encryption is identified based on the destination address of the packet or information about the network IF that transmits the packet. The packet including the data indicating the encrypted application key is passed from the output packet processing module 275 to the network IF processing module 281-2, and transferred from the network IF processing module 281-2 to the outside.

By the above process, the relay of the encrypted application key is started. In the example of Fig. 15 described above, when the application key is transmitted, not the network IF processing module 281-2 on the transmission side but the output packet processing module 275 encrypts data indicating the application key. As a result, when the application key is transmitted, the data indicating the application key is plaintext only in the section from the storage unit 22 to the output packet processing module 275.

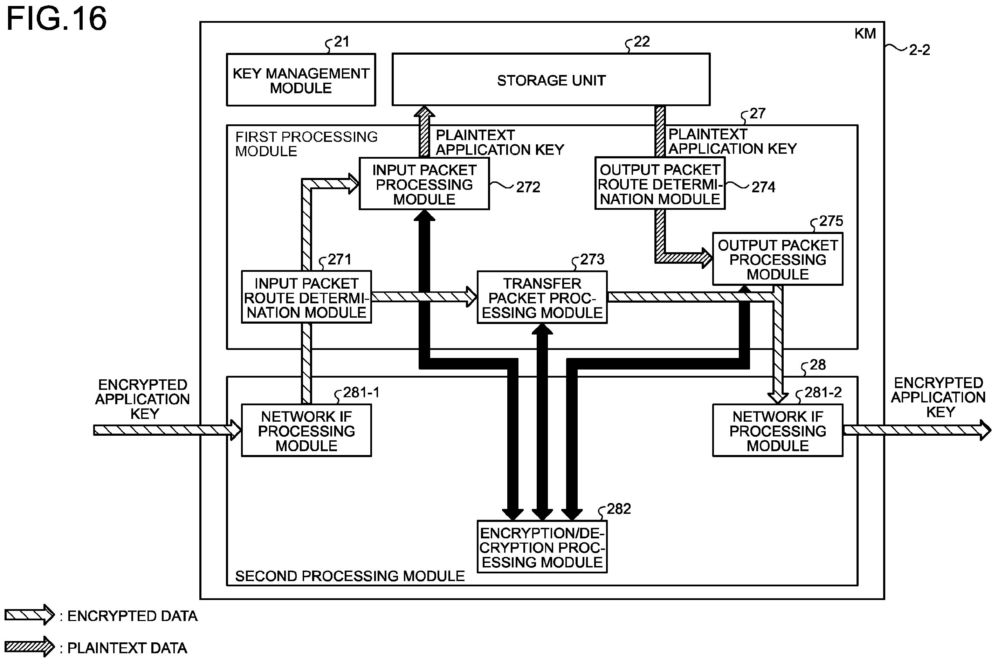

Fig. 16 is a diagram collectively illustrating three cases of Figs. 13 to 15. The relay (transfer, receive, or transmit) of the application key by the KM 2-2 described above is collected as illustrated in Fig. 16. Points and effects of the first arrangement will be confirmed again with reference to Fig. 16. As illustrated in Fig. 16, when the application key is relayed, not the network IF processing module 281 on each of the transmission side and the reception side but the transfer packet processing module 273, the input packet processing module 272, or the output packet processing module 275 decrypts or encrypts the data indicating the application key. As a result, when the application key is relayed, the data indicating the application key is plaintext only inside the first processing module 27.

As a result, a section in which data indicating an application key to be encrypted and held exists in a plaintext state is shorter inside the KM 2-2, and data security in a site holding the application key is further enhanced.

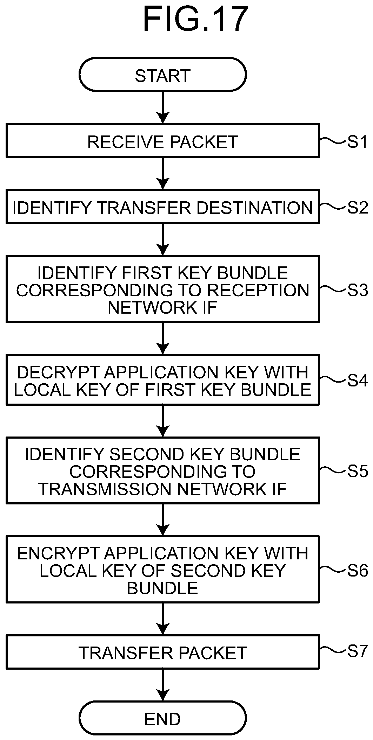

Next, a method of decrypting and encrypting data indicating an application key when the application key according to the first arrangement is transferred (relayed) will be described in detail with reference to Fig. 17.

Fig. 17 is a flowchart illustrating an operation example (in a case where an application key is transferred) of the KM 2-2 according to the first arrangement. The example of Fig. 17 illustrates a case of the "continuous process" in which the decryption process and the encryption process are continuously performed.

In the second arrangement to be described later, the "reverse order process" in which a decryption process and an encryption process are performed in the reverse order will be described. In addition, in the third arrangement to be described later, the "simultaneous process" of simultaneously performing a decryption process and an encryption process will be described.

A method of the "continuous process" will be described with reference to Fig. 17. First, the network IF processing module 281-1 receives a packet including data indicating the encrypted application key (step S1). In the case of the transfer (relay) of the application key, the packet received in step S1 is input to the transfer packet processing module 273 by the input packet route determination module 271.

Next, the transfer packet processing module 273 identifies a transfer destination (transmission network IF to which the packet is transmitted) of the packet from a destination address (an example of destination information) of the packet (step S2).

Next, the transfer packet processing module 273 identifies a key bundle (first key bundle) used to decrypt data indicating an application key from the network IF that has received the packet (step S3). The first key bundle may be identified using the transmission source address of the packet.

Next, the transfer packet processing module 273 controls execution of decryption of the application key with the local key of the first key bundle before the transmission process by the second processing module 28. The transfer packet processing module 273 instructs the encryption/decryption processing module 282 to decrypt the application key. Then, the encryption/decryption processing module 282 decrypts the data indicating the application key using the local key acquired from the first key bundle (step S4).

Next, the transfer packet processing module 273 identifies a key bundle (second key bundle) used for encrypting data indicating an application key from the transmission network IF identified in step S2 (step S5).

Next, the transfer packet processing module 273 controls execution of encryption of the application key with the local key of the second key bundle before the transmission process by the second processing module 28. The transfer packet processing module 273 instructs the encryption/decryption processing module 282 to encrypt the application key. Then, the encryption/decryption processing module 282 encrypts data indicating the application key using the local key acquired from the second key bundle (step S6).

Next, the network IF processing module 281-2 transfers a packet including data indicating the encrypted application key (step S7).

By using the method of the "continuous process" in Fig. 17, since the decryption process and the encryption process of the application key are continuously executed by the transfer packet processing module 273, the application key data exists as the plaintext only in the section (time) between the decryption process and the encryption process.

Next, a method of decrypting data indicating an application key when the application key is received according to the first arrangement will be described in detail.

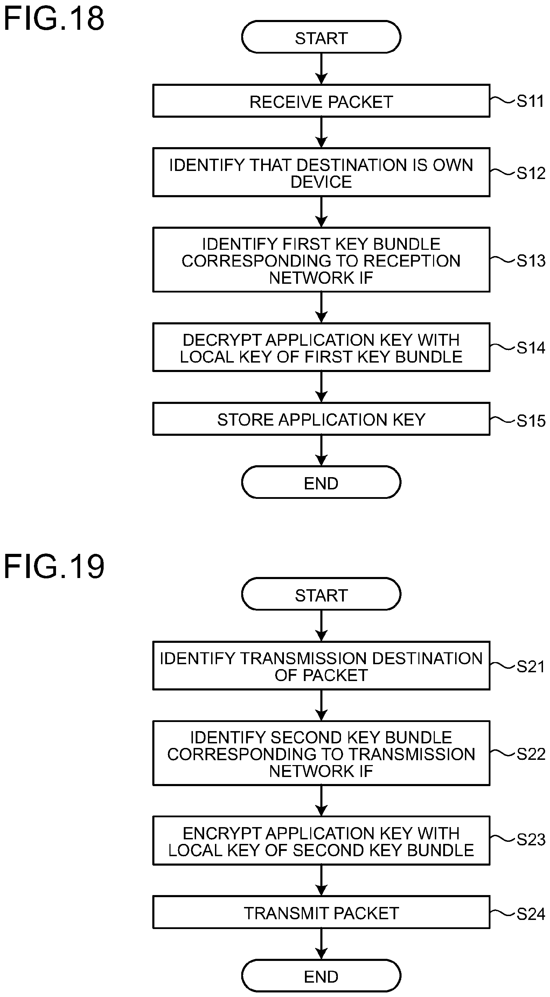

Fig. 18 is a flowchart illustrating an operation example (in a case where an application key is received) of the KM 2-2 according to the first arrangement. First, the network IF processing module 281-1 receives a packet including data indicating the encrypted application key (step S11).

Next, the input packet route determination module 271 identifies that the destination of the packet received in step S11 is the own device (step S12). The packet received in step S11 is input to the input packet processing module 272 by the input packet route determination module 271.

Next, the input packet processing module 272 identifies a key bundle (first key bundle) used to decrypt data indicating an application key from the network IF that has received the packet (step S13). The first key bundle may be identified using the transmission source address of the packet.

Next, the encryption/decryption processing module 282 decrypts the data indicating the application key using the local key acquired from the first key bundle (step S14). Next, the input packet processing module 272 stores the application key decrypted in step S14 in the storage unit 22 (step S15).

Next, a method of encrypting data indicating an application key when the application key is transmitted according to the first arrangement will be described in detail.

Fig. 19 is a flowchart illustrating an operation example (in a case where an application key is transmitted) of the KM 2-2 according to the first arrangement. First, the output packet route determination module 274 reads the data indicating the application key from the storage unit 22, and identifies a transmission destination (transmission network IF to which the packet is transmitted) of the packet including the data indicating the application key (step S21). The transmission destination of the application key is determined as a sharing destination of the application key by the key management module 21, for example.

Next, the output packet route determination module 274 identifies a key bundle (second key bundle) used for encrypting data indicating an application key from the network IF that transmits the packet (step S22). The second key bundle may be identified using a packet transmission destination address.

Next, the encryption/decryption processing module 282 encrypts data indicating the application key using the local key acquired from the second key bundle (step S23).

Next, the network IF processing module 281-2 transmits a packet including data indicating the encrypted application key (step S24).

As described above, the KM 2-2 (an example of an information processing device) of the first arrangement relays the application key (second encryption key) encrypted with the local key (first encryption key) shared between the opposing QKD devices 1 included in the QKD network 100. After determining the transfer destination of the received packet, the first processing module 27 of the KM 2-2 controls execution of decryption of the encrypted second encryption key included in the packet.

As a result, according to the first arrangement, the security of the encryption key held and managed in the device in the site can be further improved.

### Second arrangement

Next, the second arrangement will be described. In the description of the second arrangement, the description similar to that of the first arrangement will be omitted, and portions different from those of the first arrangement will be described. In the second arrangement, with respect to a method of decrypting and encrypting data indicating an application key when the application key is transferred (relayed), the "reverse order process" in which a decryption process and an encryption process are performed in reverse order will be described.

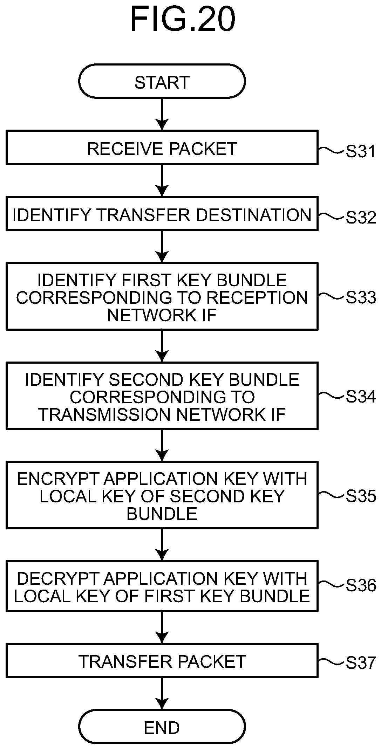

Fig. 20 is a flowchart illustrating an operation example (in a case where an application key is transferred) of the KM 2-2 according to the second arrangement. A method of the "reverse order process" will be described with reference to Fig. 20. Steps S31 to S33 are the same as steps S1 to S3 of the first arrangement, and thus description thereof is omitted.

The transfer packet processing module 273 identifies a key bundle (second key bundle) used for encrypting data indicating an application key from the transmission network IF identified in step S32 (step S34).

Next, the transfer packet processing module 273 controls execution of encryption of the application key with the local key of the second key bundle before the transmission process by the second processing module 28. The transfer packet processing module 273 instructs the encryption/decryption processing module 282 to encrypt the application key. Then, the encryption/decryption processing module 282 encrypts data indicating the application key using the local key acquired from the second key bundle (step S35). Here, the encryption method is an OTP (One-time Pad) method.

Next, the transfer packet processing module 273 controls execution of decryption of the application key with the local key of the first key bundle before the transmission process by the second processing module 28. The transfer packet processing module 273 instructs the encryption/decryption processing module 282 to decrypt the application key. Then, the encryption/decryption processing module 282 decrypts the data indicating the application key using the local key acquired from the first key bundle (step S36). Here, the decryption method is the OTP method.

Next, the network IF processing module 281-2 transfers a packet including data indicating the application key encrypted using the local key acquired from the second key bundle and the first key bundle (step S37).

In the second arrangement, by using the method of the "reverse order process" in Fig. 20, the data indicating the application key is encrypted before being decrypted in the transfer packet processing module 273 and then decrypted. An OTP is used as a method of encryption and decryption. The OTP performs an exclusive OR (XOR) operation on data indicating a local key with respect to data indicating an application key. Therefore, even when decryption is performed before encryption, or even when encryption is performed after decryption, there is no difference in resulting data. That is, the order of the encryption process and the decryption process is not limited.

According to the second arrangement, even inside the transfer packet processing module 273, there is no section (time) in which data indicating the application key exists as plaintext.

### Third arrangement

Next, the third arrangement will be described. In the description of the third arrangement, the description similar to that of the second arrangement will be omitted, and portions different from those of the second arrangement will be described. In the third arrangement, with respect to a method of decrypting and encrypting data indicating an application key when the application key is transferred (relayed), the "simultaneous process" in which a decryption process and an encryption process are simultaneously performed will be described.

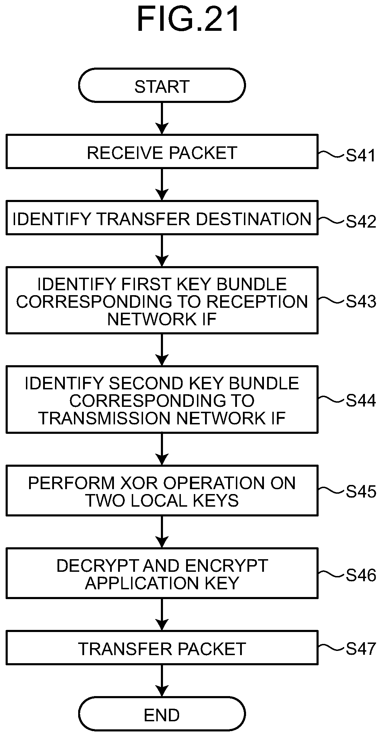

Fig. 21 is a flowchart illustrating an operation example (in a case where an application key is transferred) of the KM 2-2 according to the third arrangement. A method of the "simultaneous process" will be described with reference to Fig. 21. Steps S41 to S44 are the same as steps S31 to S34 of the second arrangement, and thus description thereof is omitted.

The transfer packet processing module 273 controls simultaneous execution of decryption and encryption of the application key before the transmission process by the second processing module 28. The transfer packet processing module 273 instructs the encryption/decryption processing module 282 to decrypt and encrypt the application key. Then, the encryption/decryption processing module 282 generates a local key (transfer local key) used for encrypting data indicating the application key by performing the XOR operation on the local key acquired from the first key bundle and the local key acquired from the second key bundle (step S45).

Next, the encryption/decryption processing module 282 performs a process for both decryption and encryption on the data indicating the application key using the transfer local key (third encryption key) generated in step S45 (step S46). As a result of the processing in step S46, the data indicating the application key is encrypted using the local key acquired from the second key bundle.

Next, the network IF processing module 281-2 transfers a packet including data indicating the application key encrypted using the local key acquired from the second key bundle (step S47).

In the third arrangement, by using the method of the "simultaneous process" in Fig. 21, the data indicating the application key is simultaneously decrypted and encrypted by conversion using the transfer local key in the transfer packet processing module 273. An OTP is used as a method of encryption and decryption. The OTP performs an XOR operation on data indicating a local key with respect to data indicating an application key. Therefore, even when the local key applied to the application key is calculated by XOR in advance and then applied to the application key, there is no difference in the resulting data.

According to the third arrangement, even inside the transfer packet processing module 273, there is no section (time) in which data indicating the application key exists as plaintext.

As described above, according to the method of decryption and encryption at the time of transfer of data indicating the application key according to the first to third arrangements, a section (time) in which the application key to be encrypted and held is held as plaintext is minimized (in the case of the first arrangement) also inside the KM 2-2. In the case of the second and third arrangements, there is no section (time) in which the application key is held as plaintext, and the security of concealing data indicating the application key is further enhanced.

The methods of decrypting and encrypting data indicating the application key (three of the "continuous processing", the "reverse order processing", and the "simultaneous processing") according to the first to third arrangements are independent methods. In practice, one of the arrangements is used to decrypt and encrypt the transferred (relayed) application key.

### Modification

Next, variations of the first to third arrangements will be described. In the first to third arrangements described above, relay, reception, and transmission for relaying a packet including data indicating an application key have been described.

In the modification, the KM 2-2 performs communication other than that of a packet including data indicating an application key. The packets unrelated to the application key do not need to be encrypted and decrypted as described in the first to third arrangements.

In the modification, the encryption and decryption described in the first to third arrangements are not applied to such an irrelevant packet by identifying at packet to be processed based on, for example, a protocol number, a port number, address information, and the like of the packet.

That is, in the modification, only a packet to be subjected to an application key relay is decrypted and encrypted by applying the first to third arrangements described above, and a packet not to be subjected to an application key relay is subjected to conventional packet processing (specifically, IP routing or bridging).

As one of the methods for realizing the operation of the modification, there is a method of applying a packet filter rule before the input packet route determination module 271 determines whether the destination of the packet including the data indicating the application key is the own device. Specifically, the input packet route determination module 271 does not perform the encryption and decryption described in the first to third arrangements described above by setting only those that match the filter rule as processing targets and excluding those that do not match the filter rule from processing targets.

Such a filter rule can be realized by, for example, iptables (nftables). For example, the first processing module 27 determines a packet to be subjected to a decryption process or an encryption process based on filter setting by iptables or nftables.

According to the modification, with the filter rule, for example, an ICMP packet, a packet for network management, and the like can be excluded from the target of encryption/decryption with a local key, and communication other than application key relay can be prevented from being adversely affected. In addition, it is possible to avoid a situation in which the local key is consumed more than necessary.

Finally, an example of a hardware configuration of the QKD device 1 and the key management device (KM) 2-2 according to the first to third arrangements will be described.

### Example of hardware configuration

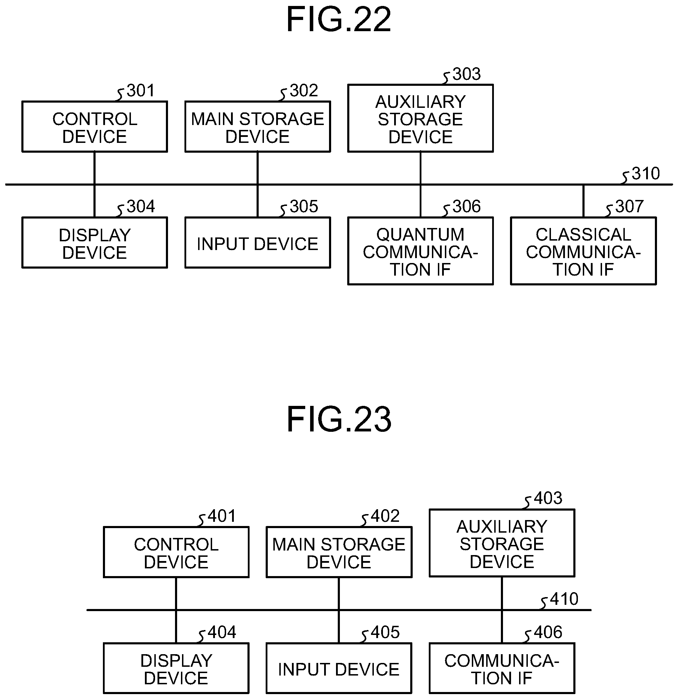

Fig. 22 is a diagram illustrating an example of a hardware configuration of the QKD device 1 according to the first to third arrangements. The QKD device 1 of the first to third arrangements includes a control device 301, a main storage device 302, an auxiliary storage device 303, a display device 304, an input device 305, a quantum communication IF 306, and a classical communication IF 307.

The control device 301, the main storage device 302, the auxiliary storage device 303, the display device 304, the input device 305, the quantum communication IF 306, and the classical communication IF 307 are connected via a bus 310.

The control device 301 executes a program read from the auxiliary storage device 303 to the main storage device 302. The main storage device 302 is a memory such as a ROM and a RAM. The auxiliary storage device 303 is an HDD, a memory card, or the like.

The display device 304 displays the state and the like of the QKD device 1. The input device 305 receives an input from the user. Note that the display device 304 and the input device 305 may be realized by a touch panel or the like having a display function and an input function. In addition, the display device 304 and the input device 305 may not be included in the QKD device 1. In this case, for example, the display function and the input function of an external terminal connected to the QKD device 1 are used.

The quantum communication IF 306 is an interface for connecting to a QKD link in which photons are transmitted. The classical communication IF 307 is an interface for connecting to a transmission path through which a control signal with the opposing QKD device 1 is transmitted, a transmission path for communicating with the key management device 2-2, and the like.

Fig. 23 is a diagram illustrating an example of a hardware configuration of the key management device 2-2 according to the first to third arrangements. The key management device 2-2 includes a control device 401, a main storage device 402, an auxiliary storage device 403, a display device 404, an input device 405, and a communication IF 406.

The control device 401, the main storage device 402, the auxiliary storage device 403, the display device 404, the input device 405, and the communication IF406 are connected via a bus 410.

The control device 401 executes a program read from the auxiliary storage device 403 to the main storage device 402. The main storage device 402 is a memory such as a ROM and a RAM. The auxiliary storage device 403 is an HDD, a memory card, or the like.

The display device 404 displays the state and the like of the key management device 2-2. The input device 405 receives an input from the user. Note that the display device 404 and the input device 405 may be realized by a touch panel or the like having a display function and an input function. In addition, the display device 404 and the input device 405 may not be included in the key management device 2-2. In this case, for example, the display function and the input function of an external terminal connected to the key management device 2-2 are used.

The communication IF406 is an interface for connection to a transmission path.

The program executed by the QKD device 1 and the key management device 2-2 according to the first to third arrangements is stored as a file in an installable format or an executable format in a computer-readable storage medium such as a CD-ROM, a memory card, a CD-R, and a digital versatile disc (DVD), and is provided as a computer program product.

The program executed by the QKD device 1 and the key management device 2-2 according to the first to third arrangements may be stored in a computer connected to a network such as the Internet and provided by being downloaded via the network.

In addition, the program executed by the QKD device 1 and the key management device 2-2 according to the first to third arrangements may be provided via a network such as the Internet without being downloaded.

In addition, the program executed by the QKD device 1 and the key management device 2-2 according to the first to third arrangements may be provided by being incorporated in advance in a ROM or the like.

The program executed by the QKD device 1 and the key management device 2-2 of the first to third arrangements has a module configuration including a function that can be realized by the program among the functional configurations of the QKD device 1 and the key management device 2-2 of the first to third arrangements. The control device 401 reads the program from the storage medium such as the auxiliary storage device 403 and executes the program, whereby the function realized by the program is loaded to the main storage device 402. That is, the function achieved by the program is generated on the main storage device 402.

Some or all of the functions of the QKD device 1 and the key management device 2-2 according to the first to third arrangements may be implemented by hardware such as an integrated circuit (IC). The IC is, for example, a processor that executes dedicated processing.

In addition, in a case where each function is achieved by using a plurality of processors, each processor may achieve one of the functions or may achieve two or more of the functions.

While certain arrangements have been described, these arrangements have been presented by way of example only, and are not intended to limit the scope of the inventions. Indeed, the novel arrangements described herein may be embodied in a variety of other forms, moreover, various omissions, substitutions, and changes in the form of the arrangements described herein may be made without departing from the scope of the invention as defined by the appended claims. The accompanying claims are intended to cover such forms or modifications as would fall within the scope of the inventions.

### Supplement

Note that the above arrangements can be summarized in the following technical ideas.

### (Technical idea 1)

An information processing device relays a second encryption key encrypted with a first encryption key shared between opposing quantum key distribution (QKD) devices included in a QKD network, the information processing device including:
a first processing module configured to control, after determining a transfer destination of a received packet, execution of decryption of the encrypted second encryption key included in the packet.

### (Technical idea 2)

The information processing device according to Technical idea 1 further includes:
a second processing module configured to perform a transmission process of transmitting a packet including the encrypted second encryption key to another information processing device via a network interface (IF).

### (Technical idea 3)

In the information processing device according to Technical idea 2,
when the transfer destination is the other information processing device, the first processing module is configured to identify a network IF used for transmitting the packet from destination information included in the packet, identify the first encryption key used for encryption from the network IF used for transmitting the packet, and control execution of encryption of the second encryption key with the identified first encryption key before the transmission process by the second processing module.

### (Technical idea 4)

In the information processing device according to Technical idea 3,
after determining the transfer destination of the received packet, the first processing module is configured to identify a network IF used for receiving the packet, identify a first decryption key used for decryption from the network IF used for receiving the packet, control execution of decryption of the second encryption key with the identified first decryption key, and then control execution of encryption of the second encryption key with the first encryption key before the transmission process by the second processing module.

### (Technical idea 5)

In the information processing device according to Technical idea 2,
when the transfer destination is the other information processing device, the first processing module is configured to:
identify a network IF used for transmitting the packet from destination information included in the packet, identify the first encryption key used for encryption from the network IF used for transmitting the packet, and control execution of encryption of the second encryption key with the identified first encryption key; and
then identify a network IF used for receiving the packet, identify a first decryption key used for decryption from the network IF used for receiving the packet, and control execution of decryption of the second encryption key with the identified first decryption key before the transmission process by the second processing module.

### (Technical idea 6)

In the information processing device according to Technical idea 2,
when the transfer destination is the other information processing device, the first processing module is configured to:
identify a network IF used for receiving the packet, and identify a first decryption key used for decryption from the network IF used for receiving the packet;
identify a network IF to be used for transmitting the packet from destination information included in the packet, and identify the first encryption key to be used for encryption from the network IF to be used for transmitting the packet;
generate a third encryption key from the identified first decryption key and the identified first encryption key; and
control simultaneous execution of decryption and encryption of the second encryption key with the third encryption key before the transmission process by the second processing module.

### (Technical idea 7)

In the information processing device according to any one of Technical ideas 3 to 6,
when the transfer destination is the other information processing device, the first processing module is configured to perform a decryption process and an encryption process by using a packet transfer hook function in iptables or nftables.

### (Technical idea 8)

In the information processing device according to any one of Technical ideas 1 to 7,
when the transfer destination is the own device, the first processing module is configured to perform an input process of storing the decrypted second encryption key in a storage device after controlling execution of decryption of the encrypted second encryption key included in the packet.

### (Technical idea 9)

In the information processing device according to Technical idea 8,
the first processing module is configured to perform the input process by using an input hook function in iptables or nftables.

### (Technical idea 10)

The information processing device according to any one of Technical ideas 2 to 9 further includes:
a random number generator configured to generate a random number indicating the second encryption key, and
when transmitting the second encryption key generated by the random number generator to the other information processing device, the first processing module is configured to perform an output process of controlling execution of encryption of the second encryption key generated by the random number generator after determining a transmission destination of the packet including the second encryption key generated by the random number generator and before the transmission process by the second processing module.

### (Technical idea 11)

In the information processing device according to Technical idea 10,
the first processing module is configured to perform the output process by using an output hook function in iptables or nftables.

### (Technical idea 12)

In the information processing device according to any one of Technical ideas 1 to 11,
the first processing module is configured to determine a packet to be subjected to a decryption process or an encryption process based on filter setting by iptables or nftables.

### (Technical idea 13)

A quantum cryptographic communication system includes:
the information processing device according to any one of Technical ideas 1 to 12; and
a QKD device configured to provide the first encryption key to the information processing device.

### (Technical idea 14)

The quantum cryptographic communication system according to Technical idea 13 further includes:
another information processing device configured to receive a packet transmitted from the information processing device according to any one of Technical ideas 1 to 12.

### (Technical idea 15)

An information processing method, executed by an information processing device that relays a second encryption key encrypted with a first encryption key shared between opposing quantum key distribution (QKD) devices included in a QKD network, includes:
controlling, after determining a transfer destination of a received packet, execution of decryption of the encrypted second encryption key included in the packet.

### (Technical idea 16)

A computer-readable medium includes instructions which, when executed by an information processing device that relays a second encryption key encrypted with a first encryption key shared between opposing quantum key distribution (QKD) devices included in a QKD network, cause the information processing device to perform:
controlling, after determining a transfer destination of a received packet, execution of decryption of the encrypted second encryption key included in the packet.

## Claims

1. An information processing device (2) that relays a second encryption key encrypted with a first encryption key shared between opposing quantum key distribution (QKD) devices (1) included in a QKD network (100), the information processing device (2) comprising:
a first processing module (27) configured to control, after determining a transfer destination of a received packet, execution of decryption of the encrypted second encryption key included in the packet.

2. The information processing device (2) according to claim 1, further comprising:
a second processing module (28) configured to perform a transmission process of transmitting a packet including the encrypted second encryption key to another information processing device (2) via a network interface (IF).

3. The information processing device (2) according to claim 2, wherein
when the transfer destination is the other information processing device, the first processing module (27) is configured to identify a network IF used for transmitting the packet from destination information included in the packet, identify the first encryption key used for encryption from the network IF used for transmitting the packet, and control execution of encryption of the second encryption key with the identified first encryption key before the transmission process by the second processing module (28).

4. The information processing device (2) according to claim 3, wherein
after determining the transfer destination of the received packet, the first processing module (27) is configured to identify a network IF used for receiving the packet, identify a first decryption key used for decryption from the network IF used for receiving the packet, control execution of decryption of the second encryption key with the identified first decryption key, and then control execution of encryption of the second encryption key with the first encryption key before the transmission process by the second processing module (28).

5. The information processing device (2) according to claim 2, wherein
when the transfer destination is the other information processing device, the first processing module (27) is configured to:
identify a network IF used for transmitting the packet from destination information included in the packet, identify the first encryption key used for encryption from the network IF used for transmitting the packet, and control execution of encryption of the second encryption key with the identified first encryption key; and
then identify a network IF used for receiving the packet, identify a first decryption key used for decryption from the network IF used for receiving the packet, and control execution of decryption of the second encryption key with the identified first decryption key before the transmission process by the second processing module (28).

6. The information processing device (2) according to claim 2, wherein
when the transfer destination is the other information processing device, the first processing module (27) is configured to:
identify a network IF used for receiving the packet, and identify a first decryption key used for decryption from the network IF used for receiving the packet;
identify a network IF to be used for transmitting the packet from destination information included in the packet, and identify the first encryption key to be used for encryption from the network IF to be used for transmitting the packet;
generate a third encryption key from the identified first decryption key and the identified first encryption key; and
control simultaneous execution of decryption and encryption of the second encryption key with the third encryption key before the transmission process by the second processing module (28).

7. The information processing device (2) according to any one of claims 3 to 6, wherein
when the transfer destination is the other information processing device, the first processing module (27) is configured to perform a decryption process and an encryption process by using a packet transfer hook function in iptables or nftables.

8. The information processing device (2) according to any one of claims 1 to 6, wherein
when the transfer destination is the own device, the first processing module (27) is configured to perform an input process of storing the decrypted second encryption key in a storage device after controlling execution of decryption of the encrypted second encryption key included in the packet.

9. The information processing device (2) according to claim 8, wherein
the first processing module (27) is configured to perform the input process by using an input hook function in iptables or nftables.

10. The information processing device (2) according to any one of claims 2 to 6, further comprising:
a random number generator configured to generate a random number indicating the second encryption key, wherein
when transmitting the second encryption key generated by the random number generator to the other information processing device, the first processing module (27) is configured to perform an output process of controlling execution of encryption of the second encryption key generated by the random number generator after determining a transmission destination of the packet including the second encryption key generated by the random number generator and before the transmission process by the second processing module (28).

11. The information processing device (2) according to claim 10, wherein
the first processing module (27) is configured to perform the output process by using an output hook function in iptables or nftables.

12. The information processing device (2) according to any one of claims 1 to 6, wherein
the first processing module (27) is configured to determine a packet to be subjected to a decryption process or an encryption process based on filter setting by iptables or nftables.

13. A quantum cryptographic communication system comprising:
the information processing device (2) according to any one of claims 1 to 6; and
a QKD device (1) configured to provide the first encryption key to the information processing device (2).

14. The quantum cryptographic communication system according to claim 13, further comprising:
another information processing device (2) configured to receive a packet transmitted from the information processing device according to any one of claims 1 to 6.

15. An information processing method executed by an information processing device (2) that relays a second encryption key encrypted with a first encryption key shared between opposing quantum key distribution (QKD) devices (1) included in a QKD network (100), the information processing method comprising:
controlling, after determining a transfer destination of a received packet, execution of decryption of the encrypted second encryption key included in the packet.

16. A computer-readable medium comprising instructions which, when executed by an information processing device (2) that relays a second encryption key encrypted with a first encryption key shared between opposing quantum key distribution (QKD) devices (1) included in a QKD network (100), cause the information processing device to perform:
controlling, after determining a transfer destination of a received packet, execution of decryption of the encrypted second encryption key included in the packet.
